# DEMANDE DE BREVET EUROPEEN

(11) **EP 2 811 189 A1**
(43) Date de publication de la demande: **10.12.2014**
(21) Numéro de dépôt: 14170917.0
(22) Date de dépôt: 03.06.2014
(51) Int. Cl.: F16C 33/54, F16C 33/51, F16C 19/22

(54) **Cage segmentée pour unité de roulement.**

(30) Priorité: 03.06.2013 FR 1355065
(71) Demandeur: NTN-SNR Roulements, 74000 Annecy (FR)
(72) Inventeur: Joignant, Cyril, 74000 ANNECY (FR)
(74) Mandataire: Derambure Conseil

(57) **Abrégé**

Segment de cage segmentée pour une unité de roulement, comprenant :
deux bras latéraux (20) se faisant face dans la direction générale d'un axe géométrique axial (AA) de l'unité de roulement, les bras latéraux (20) s'étendant chacun entre une première et une seconde extrémités circonférentielles (26, 28) ;
un premier et un second ponts de liaison (22) reliant structurellement les deux bras latéraux (20) pour les rendre solidaires l'un de l'autre, le premier et le second ponts de liaison (22) définissant avec les deux bras latéraux (20) un logement (24) ouvert destiné à accueillir un corps roulant ;
le segment (19) de cage segmentée étant constitué d'un seul tenant par mise en forme d'une plaque de tôle et il comporte une conformation en volume par rapport à une courbe circonférentielle moyenne (S) entre une bague intérieure (12) et une bague extérieure (14) d'une unité de roulement lorsque le segment (19) est en position entre les bagues extérieure (14) et intérieure (12) de l'unité de roulement.

## Description

L'invention concerne le domaine des cages segmentées pour roulements.

Elle a plus spécialement pour objet, un segment de cage segmentée pour une unité de roulement, une unité de roulement comprenant de tels segments et un procédé de fabrication d'un segment de cage segmentée.

Les cages sont utilisées dans les unités de roulement pour séparer les corps roulants le long de la circonférence des bagues intérieures et extérieures et maintenir leur équidistance. Les cages permettent ainsi de réduire le frottement et, donc, l'échauffement généré lors de l'utilisation des unités de roulement.

Les cages de roulement sont usuellement monobloc et fabriquées en tôle, plastique ou laiton par conformage de plaques de tôle, injection dans un moule spécifique ou usinage à partir d'un bloc de métal.

L'utilisation d'une cage monobloc pose cependant des problèmes lorsque le roulement est de très grandes dimensions. En effet, les cages monobloc en tôle ou en plastique classiques sont alors difficiles à réaliser car elles nécessitent des moules d'injection ou des outillages de conformation de taille rédhibitoire.

Il est connu de l'état de la technique des solutions consistant en une cage segmentée formée par une succession de segment de cage segmentée, placés entre les bagues intérieures et extérieures, le long de la circonférence du roulement. Notamment les documents WO 2012/076583 et WO 2007/105476 se rapportent à des cages segmentées en plastique (en particulier poly-phenylsulfide ou poly-ether-ketone) pour des roulements de très grande taille utilisés par exemple dans des éoliennes.

Le document WO 2011/077831 rapporte un autre exemple de cage segmentée comportant des segments munis d'un corps en résine et d'un cadre métallique entourant intégralement le corps du segment.

La réalisation de telles cages segmentées en plastique, résine, habituellement en PEEK renforcé à la fibre de verre ou de carbone, ou en matériaux usinés présente cependant plusieurs inconvénients.

Ainsi le coût de fabrication des moules d'injection sont élevés pour un nombre de segments fabriqués usuellement faible. Les coûts d'usinage et d'assemblage des segments de cage sont élevés. De telles cages segmentées sont également volumineuses et emplissent une grande partie de l'espace entre les bagues intérieures et extérieures du roulement, laissé libre par les rouleaux. Ceci réduit la circulation du lubrifiant dans le roulement et peut conduire à un échauffement de l'unité de roulement. Enfin, de telles cages segmentées sont fragiles car les segments peuvent être amenés à s'entrechoquer et à exercer des forces considérables les uns sur les autres, en particulier selon la direction circonférentielle du roulement. Il est alors nécessaire d'utiliser des dessins spéciaux pour les cages segmentées tels que décrits dans le document WO 2007/105476 qui augmentent encore le volume de la cage segmentée.

Le document GB 796920 décrit une cage segmentée en métal avec un grand nombre de segments en métal fritté. Ce type de segment en métal fritté présente des inconvénients d'encombrement et de fragilité similaires à ceux détaillés ci-avant concernant les cages segmentées en plastique et résine. En outre, l'usinage et la fabrication des segments de cage sont également d'un coût élevé en regard du nombre de segments fabriqués.

Les documents US 2012/0195539, US 6364533, US 6709163 et US 2002/0081053 décrivent des cages métalliques comportant plusieurs segments pouvant, en particulier, être réalisés en tôle métallique. Les cages segmentées décrites dans ces documents peuvent, dans certains de leurs modes de réalisation, présenter un coût de fabrication et un encombrement inférieurs à ceux de cages segmentées en plastique et résine telles que détaillées ci-avant. L'assemblage de telles cages segmentées nécessite cependant d'associer les segments l'un à l'autre par des mécanismes de connexion entre leurs extrémités en contact, afin de garantir une rigidité suffisante à la cage segmentée pour que cette dernière puisse remplir sa fonction. Le nombre de segments de la cage segmenté doit également être faible pour assurer la bonne rigidité de la cage. Ainsi, les cages décrites dans ces documents ne comportent que deux segments ce qui rend les rend impropres à une installation sur des roulements de diamètre importants, les segments de grande taille étant difficiles à manipuler et mettre en place.

Il existe par conséquent le besoin de proposer un roulement comportant une cage segmentée, et des segments constituant cette dernière, de coût et d'encombrement réduit, la cage segmentée étant rigide et résistante aux chocs et permettant d'améliorer la durée de vie des unités de roulement tout en réduisant les coûts de fabrication.

Ci-après, un exposé de l'invention telle que caractérisée dans les revendications.

Selon un premier aspect, l'invention se rapporte à un segment de cage segmentée pour une unité de roulement, destiné à être positionné entre une bague extérieure et une bague intérieure, comprenant :
deux bras latéraux se faisant face dans la direction générale d'un axe géométrique axial de l'unité de roulement lorsque le segment est en position entre les bagues extérieure et intérieure de l'unité de roulement, les bras latéraux s'étendant chacun entre une première et une seconde extrémité circonférentielle ;
un premier et un second pont de liaison reliant structurellement les deux bras latéraux pour les rendre solidaires l'un de l'autre, le premier et le second pont de liaison définissant avec les deux bras latéraux un logement ouvert destiné à accueillir un corps roulant ;
le segment de cage segmentée étant caractérisé en ce qu'il est constitué d'un seul tenant par mise en forme d'une plaque de tôle et en ce qu'il comporte une conformation en volume par rapport à une courbe circonférentielle moyenne entre une bague intérieure et une bague extérieure d'une unité de roulement lorsque le segment est en position entre les bagues extérieure et intérieure de l'unité de roulement,
le segment de cage segmentée ayant une rigidité suffisante pour permettre aux segments d'une cage segmentée composée de tels segments de se mouvoir indépendamment les uns des autres lorsqu'ils sont en position entre les bagues extérieure et intérieure de l'unité de roulement.

Grâce à ces dispositions, on obtient de manière simple un segment de cage fonctionnel susceptible d'être utilisé pour réaliser une cage segmentée de grande longévité.

Selon une réalisation, on prévoit un segment de cage segmentée présentant au moins une zone de débord radial interne et au moins une zone de débord radial externe par rapport à une courbe circonférentielle moyenne entre une bague intérieure et une bague extérieure d'une unité de roulement lorsque le segment est en position entre les bagues extérieure et intérieure de l'unité de roulement.

Selon une réalisation, les zones de débord radial interne et les zones de débord radial externe sont circonférentiellement alternées, au moins une zone de débord radial interne étant entourée par deux zones de débord radial externe ou au moins une zone de débord radial externe étant entourée par deux zones de débord radial interne.

Selon une réalisation, l'un au moins des bras latéraux présente une forme circonférentielle sensiblement ondulée autour de la courbe circonférentielle moyenne lorsque le segment est positionné entre la bague extérieure et la bague intérieure de l'unité de roulement, une ondulation dudit bras latéral comprenant une zone de débord radial interne et/ou une zone de débord radial externe du segment.

Selon une réalisation, l'un au moins des bras latéraux présente une succession de parties arquées séparées par des parties rectilignes, au moins une partie arquée dudit bras latéral comprenant une zone de débord radial interne ou une zone de débord radial externe, au moins un pont de liaison du segment de cage étant relié audit bras latéral à l'endroit d'une partie rectiligne.

Selon une réalisation, ledit bras latéral comporte au moins trois parties arquées.

Selon une réalisation, l'un au moins des ponts de liaison comporte une partie en débord radial s'étendant radialement par rapport à la courbe circonférentielle moyenne lorsque le segment est positionné entre la bague extérieure et la bague intérieure de l'unité de roulement, la partie en débord radial du pont de liaison comprenant une zone de débord radial interne et/ou externe du segment.

Selon une réalisation, une distance radiale entre une zone de débord radial externe et une zone de débord radial interne du segment est inférieure à une distance radiale entre la bague intérieure et la bague extérieure de l'unité de roulement de façon à fournir un jeu radial entre le segment de cage segmentée et l'une au moins des bagues intérieure et extérieure de l'unité de roulement lorsque le segment est positionné entre la bague extérieure et la bague intérieure de l'unité de roulement.

Selon une réalisation, les ponts de liaison présentent une première surface de contact et une seconde surface de contact, l'une au moins des première et seconde surfaces de contact étant susceptible d'être en contact avec un corps roulant lorsque le segment est positionné entre une bague extérieure et une bague intérieure d'une unité de roulement.

Selon une réalisation, une dimension, selon la direction circonférentielle, d'un logement ouvert est inférieure à un diamètre d'un corps roulant destiné à être accueilli dans ledit logement, de façon à ce que ledit corps roulant ne puisse pas traverser ledit logement de part en part lorsqu'il est accueilli dans ledit logement.

Selon une réalisation, les logements ouverts destinés à accueillir les corps roulants sont situés à l'endroit des zones de débord radial interne et des zones de débord radial externe.

Selon une réalisation, le segment de cage segmentée comporte une pluralité de ponts de liaison reliant structurellement les deux bras latéraux façon à définir avec les deux bras latéraux une pluralité de logements ouverts destinés chacun à accueillir un corps roulant.

Selon une réalisation, le segment de cage segmentée comporte un nombre pair de ponts de liaison reliant structurellement les deux bras latéraux façon à définir avec les deux bras latéraux un nombre impair de logements ouverts destinés chacun à accueillir un corps roulant.

Selon une réalisation, le segment de cage segmentée comporte un nombre de logements ouverts impair, le nombre de logements ouverts étant en outre supérieur ou égal à trois logements.

Selon une réalisation, les ponts de la pluralité de ponts de liaison sont disposés régulièrement le long des bras latéraux.

Selon une réalisation, le segment est réalisé en acier doux.

Selon un autre aspect, l'invention se rapporte à une cage segmentée comportant un ensemble de segments de cage segmentée tels que décrits ci-dessus, les segments de cage segmentée étant aptes à se mouvoir indépendamment les unes des autres.

Selon un autre aspect, l'invention se rapporte à une unité de roulement, comprenant une bague intérieure, une bague extérieure ainsi que des segments de cage segmentée tels que décrits ci-dessus et des corps roulants positionnés entre les bagues intérieure et extérieure.

Selon une réalisation, les segments de cage segmentée sont positionnés circonférentiellement entre les bagues intérieure et extérieure, des corps roulants sont positionnés dans les logements des segments de cage segmentée et au moins deux segments circonférentiellement successifs sont séparés par un corps roulant.

Selon une réalisation, les segments de cage segmentée sont positionnés circonférentiellement entre les bagues intérieure et extérieure, des corps roulants sont positionnés dans les logements des segments de cage segmentée et au moins deux segments circonférentiellement successifs sont en contact.

Selon une réalisation, les corps roulants sont des rouleaux coniques ou cylindriques.

Selon une réalisation, pour chaque segment de cage segmentée, les corps roulants sont successivement alternativement placés du côté radial interne et du côté radial externe du segment.

Selon un autre aspect, l'invention se rapporte à un procédé de fabrication d'un segment de cage segmentée pour une unité de roulement, destiné à être positionné entre une bague extérieure et une bague intérieure, dans lequel
- on fournit une plaque de tôle ; et
- on met en forme ladite plaque de tôle pour définir
   deux bras latéraux se faisant face dans la direction générale d'un axe géométrique axial et s'étendant chacun entre une première et une seconde extrémité circonférentielle, et
   un premier et un second pont de liaison reliant structurellement les deux bras latéraux pour les rendre solidaires l'un de l'autre, le premier et le second pont de liaison définissant avec les deux bras latéraux un logement ouvert destiné à accueillir un corps roulant,
   une conformation en volume par rapport à une courbe circonférentielle moyenne entre une bague intérieure et une bague extérieure d'une unité de roulement lorsque le segment est en position entre les bagues extérieure et intérieure de l'unité de roulement,
   le segment de cage segmentée ayant une rigidité suffisante pour permettre aux segments d'une cage segmentée composée de tels segments de se mouvoir indépendamment les uns des autres lorsqu'ils sont en position entre les bagues extérieure et intérieure de l'unité de roulement.

D'autres caractéristiques et avantages de l'invention apparaîtront au cours de la description suivante de plusieurs de ses formes de réalisation, données à titre d'exemple non limitatif, en regard des dessins joints.

Sur les dessins :
- La figure 1 est une vue de détail, en coupe radiale, d'une unité de roulement comportant une bague intérieure, une bague extérieure, des corps roulants et une cage segmentée selon l'invention ;
- La figure 2 est une vue de face de l'unité de roulement de la figure 1 sans la cage ;
- La figure 3 est une vue de détail d'un segment de cage segmentée selon un premier mode de réalisation de l'invention ;
- La figure 4 est une vue de détail, en vue de face, d'une unité de roulement comportant une bague intérieure, une bague extérieure, des corps roulants et une cage segmentée selon un mode de réalisation de l'invention ;
- La figure 5 est une vue de détail d'un segment de cage segmentée selon un second mode de réalisation de l'invention ;
- La figure 6 est une vue de détail d'un segment de cage segmentée selon un troisième mode de réalisation de l'invention ;
- La figure 7 est une vue de détail, en perspective, d'une portion de cage segmentée lorsque la cage segmentée est disposée dans une unité de roulement selon un premier mode de réalisation de l'invention, les bagues intérieures et extérieure étant masquées ;
- La figure 8 est une vue de détail, en perspective, d'une portion de cage segmentée lorsque la cage segmentée est disposée dans une unité de roulement selon un second mode de réalisation de l'invention, les bagues intérieures et extérieure étant également masquées.

Sur les différentes figures, les mêmes références désignent des éléments identiques ou similaires.

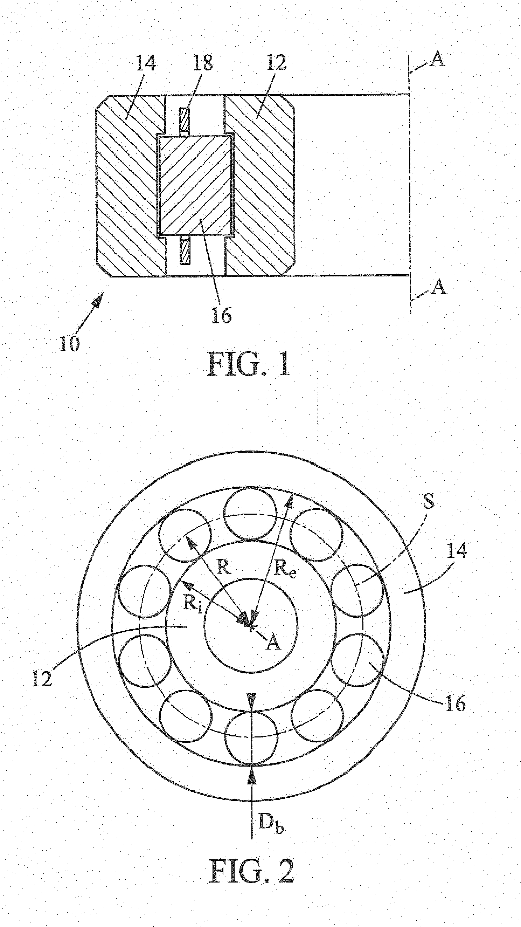

Les figures 1 et 2 illustrent un mode de réalisation d'une unité de roulement 10 selon l'invention.

L'unité de roulement 10 comporte une bague extérieure 14, une bague intérieure 12, une pluralité de corps roulants 16 agencés entre les bagues extérieure 14 et intérieure 12, ainsi qu'une cage segmentée 18 selon l'invention.

Cette unité de roulement 10 peut, par exemple, s'emmancher sur un arbre central d'entraînement de grand diamètre, par exemple un arbre principal ou une couronne d'orientation d'éolienne ou tout autre arbre de diamètre important pour lequel le recours à une cage segmentée peut être avantageux.

Les corps roulants 16 peuvent être de tous types, par exemple des rouleaux coniques ou cylindriques adaptés aux efforts radiaux importants à l'oeuvre sur les arbres principaux d'éoliennes. Dans le cas d'efforts axiaux important, par exemple pour une couronne d'orientation d'éolienne, les corps roulants peuvent être des billes ou d'autres types de corps roulants adaptés aux efforts à l'oeuvre.

L'unité de roulement est généralement symétrique de révolution autour d'une direction axiale A-A et par convention, il convient de mentionner, d'une part, que la direction axiale fera référence dans la suite du texte à toute direction coïncidant avec l'axe géométrique de révolution A-A de l'unité de roulement 10 et, d'autre part, que la direction radiale fera référence à toute direction issue de l'axe géométrique de révolution A-A et appartenant à un plan perpendiculaire à cet axe géométrique de révolution A-A. Enfin, par « circonférentielle » et « circonférentiel », on entendra des directions ortho-radiales à la direction axiale A-A au point considéré et/ou des trajectoires sensiblement circulaires (ou parfaitement circulaires) autour de la direction axiale A-A et appartenant à un plan perpendiculaire à cet axe géométrique de révolution A-A.

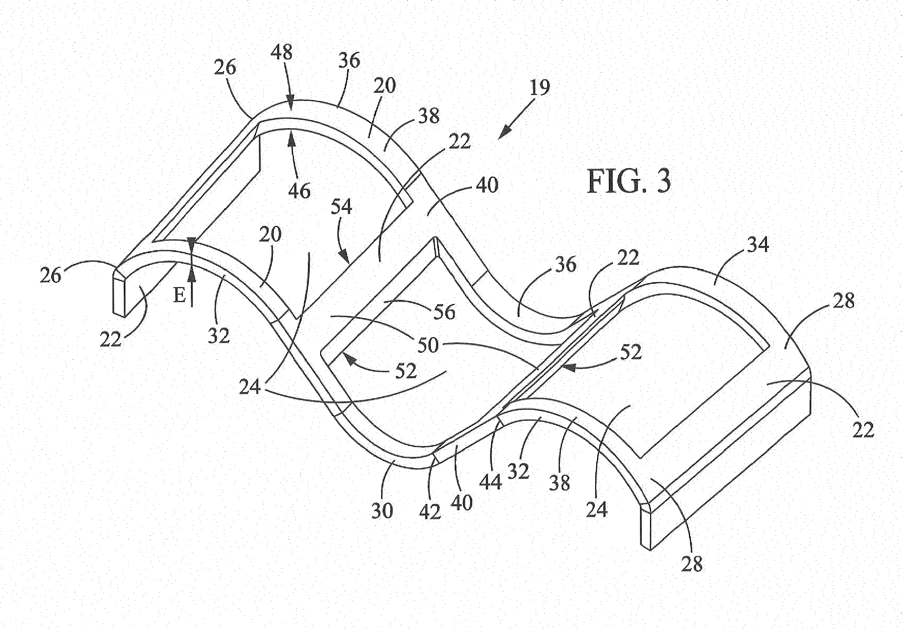

La figure 3 illustre un mode de réalisation d'une cage segmentée 18 selon l'invention.

La cage segmentée 18 en question comporte une pluralité de segments 19 de cage segmentée positionnés entre la bague extérieure 14 et la bague intérieure 12. Chaque segment 19 s'étend donc sensiblement circonférentiellement autour de la direction axiale A-A lorsqu'il est mis en position dans l'unité de roulement.

Les segments 19 de la cage segmentée sont indépendant les uns des autres, c'est-à-dire aptes en particulier à se mouvoir indépendamment les uns des autres lorsqu'ils sont en position entre les bagues extérieure et intérieure de l'unité de roulement.

A cette fin, les segments 19 sont chacun suffisamment rigides pour qu'il ne soit pas nécessaire de prévoir de les relier entre eux pour obtenir une cage fonctionnelle.

Les segments 19 sont constitués d'un seul tenant par mise forme d'une plaque de tôle comme il est détaillé ci-après. Les segments 19 peuvent en particulier être réalisés en acier doux.

Chaque segment 19 comporte deux bras latéraux 20 se faisant face dans la direction générale de l'axe géométrique axial A-A de l'unité de roulement 10 lorsque le segment est en position entre les bagues extérieure et intérieure de l'unité de roulement.

Les segments 19 comportent également une pluralité de ponts de liaison 22 reliant structurellement les deux bras latéraux 20 de manière à les rendre solidaires et à former une pluralité de logements ouverts 24 destinés à accueillir les corps roulants 16 de l'unité de roulement 10. Les bras latéraux 20 s'étendent chacun entre une première 26 et une seconde 28 extrémités circonférentielles sur une longueur circonférentielle Ls par exemple comprise entre 100 et 300 mm.

Les segments 19 de cage segmentée présentent une conformation en volume par rapport à une courbe circonférentielle moyenne S (illustrée sur la figure 2) entre la bague intérieure 12 et la bague extérieure 14 de l'unité de roulement 10 lorsque le segment est en position entre les bagues extérieure et intérieure de l'unité de roulement. La courbe circonférentielle moyenne S peut par exemple présenter un rayon de courbure R compris entre le rayon de courbure Ri de la bague intérieure 12 et le rayon de courbure Re de la bague extérieure 14. La courbe circonférentielle moyenne S peut ainsi être localisée à proximité ou à l'endroit de la moitié de la distance radiale Db séparant la bague intérieure 12 de la bague extérieure 14 lorsque le segment 19 est en position entre les bagues extérieure et intérieure de l'unité de roulement,

Plus précisément, chaque segment 19 présente au moins une zone de débord radial interne 30 et au moins une zone de débord radial externe 32. Les zones de débord radial 30, 32 sont en débord radial par rapport à la courbe circonférentielle moyenne S lorsque le segment est en position entre les bagues extérieure et intérieure de l'unité de roulement, elles s'étendent donc radialement de part et d'autre de ladite courbe circonférentielle moyenne S. En particulier, les zones de débord radial 30, 32 peuvent s'étendre radialement de part et d'autre de ladite courbe circonférentielle moyenne S d'une distance radiale Ds.

Dans un mode de réalisation, la distance radiale Ds entre une zone de débord radial externe 32 et une zone de débord radial interne 30 du segment peut également être inférieure à la distance radiale Db entre la bague intérieure 12 et la bague extérieure 14 de l'unité de roulement. De cette façon il est conservé un jeu radial entre le segment 19 de cage segmentée et l'une au moins des bagues intérieure 12 et extérieure 14 de l'unité de roulement 10 lorsque le segment 19 est positionné entre la bague extérieure 14 et la bague intérieure 12 de l'unité de roulement 10.

La distance radiale Ds est par exemple inférieure à quatre-vingt pourcents de la distance radiale Db. La distance radiale Ds est en outre, par exemple supérieure à supérieure à cinq fois l'épaisseur E de la plaque de tôle constituant le segment 19. Ainsi, la distance radiale Ds peut par exemple être comprise entre 20 et 50 mm.

Les zones de débord radial interne 30 et externe 32 du segment de cage segmentée 19 peuvent être circonférentiellement alternées. Ainsi, sur la figure 3, une zone de débord radial interne 30 est entourée par deux zones de débord radial externe 32. En variante, une zone de débord radial externe 32 peut être entourée par deux zones de débord radial interne 30.

Les zones de débord radial interne 30 et externe 32 peuvent accueillir les logements 24 comme il sera détaillé ci-après.

Dans un premier mode de réalisation illustré sur la figure 3, les bras latéraux 20 peuvent présenter une forme circonférentielle 34 sensiblement ondulée autour de la courbe circonférentielle moyenne S. Les ondulations 36 des bras latéraux 20 comprennent les zones de débord radial interne 32 et les zones de débord radial externe du segment 34.

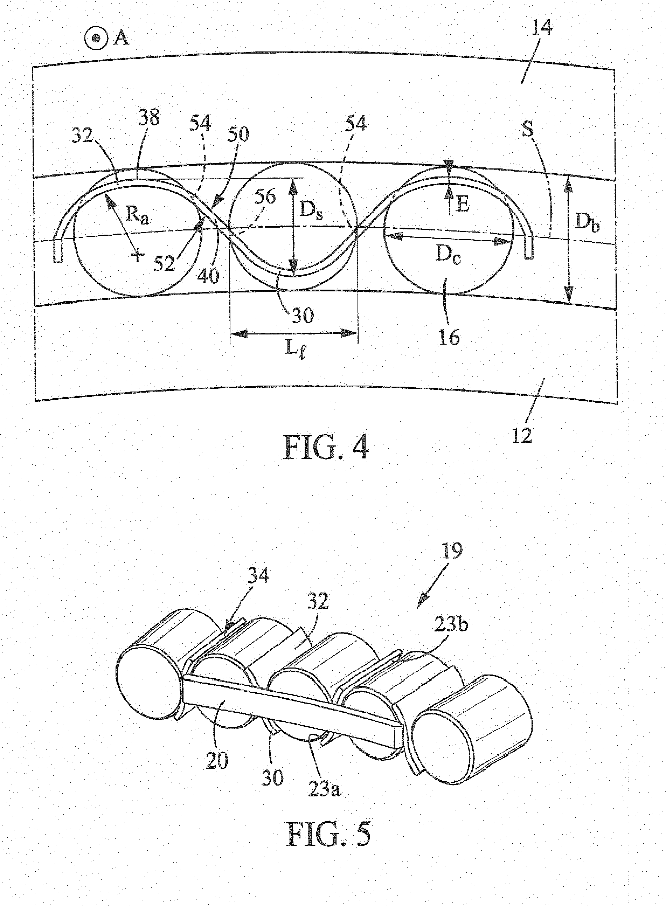

Plus particulièrement les ondulations 36 peuvent comporter des parties arquées 38 comprenant les zones de débord radial interne 30 et externe 32. Les parties arquées 38 présentent par exemple une courbure selon une direction axiale. Dans le mode de réalisation des figures 3 et 4, chaque partie arquée 38 est courbée uniquement dans un sens autour de la direction axiale A-A, c'est-à-dire sans inversion de courbure. Le rayon de courbure Ra des parties arquées 38 autour de la direction axiale A-A est sensiblement constant au long de ladite partie arquée 38 et peut être compris entre 20 et 50 mm.

Les parties arquées 38 sont reliées entre elles par des parties rectilignes 40. Une partie rectiligne 40 peut être reliée, à l'un de ses extrémités circonférentielles 42, à une partie arquée 38 courbée dans un premier sens autour de la direction axiale A-A et, à son autre extrémité circonférentielle 44, à une partie arquée 38 courbée dans un second sens, inverse du premier sens, autour de la direction axiale A-A.

Dans l'exemple des figures 3 et 4, les ponts de liaison 22 du segment de cage 19 sont reliés aux bras latéraux 20 à l'endroit des parties rectilignes 40. Les ponts de liaison 22 présentent ainsi une géométrie sensiblement plane.

Dans le mode de réalisation des figures 3 et 4, les bras latéraux 20 comportent trois parties arquées 38 séparées par deux parties rectilignes 40. De cette façon sont définis trois logements ouverts 24 destinés à accueillir les corps roulants 16 de l'unité de roulement 10.

Dans un second mode de réalisation illustré figure 5, l'un au moins des ponts de liaison 22 comporte une partie en débord radial 44 s'étendant sensiblement de façon radiale par rapport à la courbe circonférentielle moyenne S lorsque le segment est positionné entre la bague extérieure et la bague intérieure de l'unité de roulement. La partie en débord radial 44 du pont de liaison 22 comprend ainsi une zone de débord radial interne 30 et/ou externe 32 du segment 19. Ces deux zones d'un même pont de liaison 22 sont sensiblement alignées l'une avec l'autre et s'étendent selon un axe incliné par rapport aux bras latéraux 20. Une face 23a du pont de liaison 22 au niveau de la zone de débord radial interne est conformée pour guider le corps roulant 16 lui faisant face, et la face opposée 23b du même pont de liaison 22 au niveau de la zone de débord radial externe est conformée pour guider le corps roulant 16 adjacent.

Dans l'exemple de la figure 5, les bras latéraux 20 du segment 19 sont sensiblement plans et s'étendent selon la direction circonférentielle.

De façon générale, le segment de cage segmentée 19 est réalisé à partir de l'emboutissage d'une plaque de tôle et chacun des bras latéraux 20 du segment 19 présentent une surface radiale interne 46 et une surface radiale externe 48 séparées par une épaisseur de plaque de tôle E par exemple comprise entre 2 et 5 mm.

Dans le mode de réalisation des figures 3 et 4, les surfaces radiales interne 46 et externe 48 s'étendent selon une direction sensiblement proche d'une direction circonférentielle mais peuvent s'en éloigner en fonction, en particulier, de l'amplitude des ondulations 38. Les surfaces radiales interne 46 et externe 48 s'étendent, dans leur autre dimension, selon la direction générale de l'axe géométrique axial A-A.

Egalement de façon générale, les ponts de liaisons 22 présentent une surface radiale externe 50 et une surface radiale interne 52 séparées par une épaisseur de plaque de tôle E comprise par exemple entre 2 et 5 mm. Les surfaces radiales externes et internes 50, 52 s'étendent en particulier selon la direction générale de l'axe géométrique axial A-A.

Les ponts de liaisons 22 présentent également une première surface de contact 54 et une seconde surface de contact 56 qui sont susceptibles d'être en contact avec un corps roulant 16 lorsque le segment 19 est positionné dans l'unité de roulement. Les première et seconde surfaces de contact 54, 56 permettent de séparer les corps roulants 16 et de maintenir leur équidistance. Le segment 19 est ainsi apte à réduire le frottement et l'échauffement généré lors de l'utilisation de l'unité de roulement.

On comprend donc que la première surface de contact 54 d'un pont de liaison 22 définit, avec la seconde surface de contact 56 du pont de liaison 22 suivant dans la succession circonférentielle des ponts de liaison 22 du segment 19, et les deux bras latéraux, un logement 24 accueillant un corps roulant 16.

La longueur LI d'un logement 24 est entendue comme étant la distance circonférentielle LI séparant ladite première surface de contact 54 d'un pont de liaison 22 et ladite seconde surface de contact 56 du pont de liaison 22 suivant dans la succession circonférentielle des ponts de liaison 22 du segment 19. Cette distance circonférentielle LI peut par exemple être entendue comme la distance séparant les points desdites surfaces de contact susceptibles d'entrer en contact avec le corps roulant 16 accueilli dans le logement 24.

La longueur d'un logement 24 peut être inférieure à un diamètre Dc du corps roulant 16. De cette façon, le corps roulant 16 ne peut pas traverser le logement 24 de part en part selon la direction radiale de l'unité de roulement et est placé soit du côté radial interne soit du côté radial externe du segment 19 dans l'unité de roulement.

En particulier, un corps roulant 16 peut être placé soit du côté radial externe d'une zone de débord radial interne 30 soit du côté radial interne d'une zone de débord radial externe 32.

Lorsque le segment est positionné entre la bague extérieure et la bague intérieure de l'unité de roulement, les première et seconde surfaces de contact 54, 56 d'un pont de liaison 22 peuvent être situées, pour l'une, du côté radial interne de la courbe circonférentielle moyenne S, et pour l'autre, du côté radial externe cette courbe. A cette fin, les ponts de liaison 22 peuvent présenter une certaine inclinaison par rapport à la direction de la courbe circonférentielle moyenne S.

Les corps roulant 16, accueillis dans les logements 24 circonférentiellement successif du segment 19, peuvent ainsi être successivement alternativement placés du côté radial interne et du côté radial externe du segment 19 dans l'unité de roulement.

Dans certains modes de réalisation, cette disposition alternée des corps roulants 16 dans les logements 24, associée au fait que les corps roulants 16 ne peuvent pas traverser les logements 24 dans la direction radiale, permet aux corps roulants 16 de maintenir le segment 19 sensiblement centré sur la courbe circonférentielle moyenne S et de prévenir ainsi un contact du segment 19 avec la bague extérieure 14 ou la bague intérieure 12.

Dans un autre mode de réalisation, les zones de débord radial interne 30 et externe 32 peuvent être respectivement susceptibles d'être en contact avec la bague intérieure 12 et la bague extérieure 14 de l'unité de roulement 10 lorsque le segment 19 est en position dans ladite unité de roulement. Les zones de débord radial interne 30 et externe 32 permettent alors de maintenir les ponts de liaison 22 du segment 19 de cage segmentée à proximité radiale (ou à l'endroit radial) de la courbe circonférentielle moyenne S.

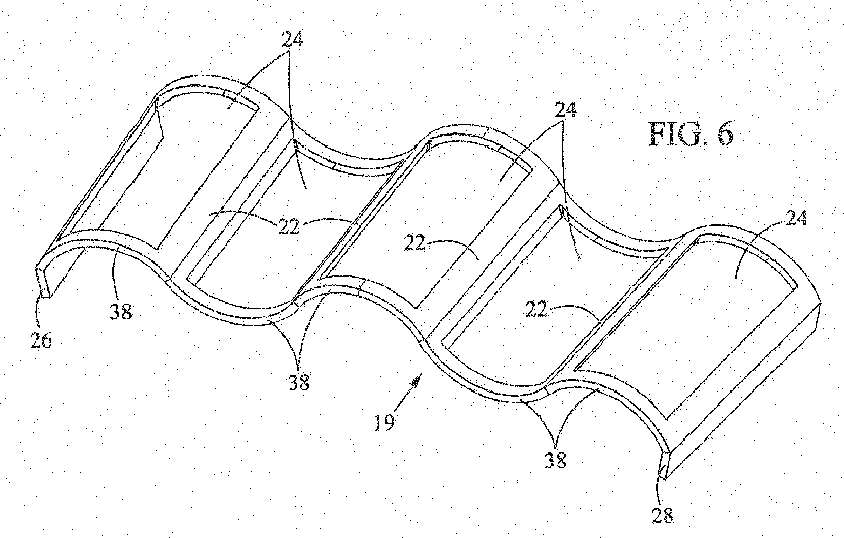

Comme illustré sur les figures 3 et 6, un segment 19 peut comporter une pluralité de ponts de liaison 22 reliant structurellement les deux bras latéraux 20, par exemple un nombre plus ou moins élevé de ponts de liaison 22. Ainsi le segment 19 comporte quatre ponts de liaison 22 sur la figure 3 et six ponts de liaison 22 sur la figure 6. Les ponts de liaison 22 sont avantageusement disposés régulièrement le long des bras latéraux 20. Les ponts de liaison 22 définissent avec les deux bras latéraux 20 une pluralité de logements ouverts 24 destinés chacun à accueillir un corps roulant 16. Un segment 19 peut donc accueillir un nombre plus ou moins important de corps roulants 16.

Dans les modes de réalisation des figures 3 et 6, le segment 19 présente un nombre pair de ponts de liaison 22 reliant structurellement les deux bras latéraux 20 qui définissent avec les deux bras latéraux 20 un nombre impair de logements ouverts 24 destiné chacun à accueillir un corps roulant 16.

Plus généralement, le nombre de logements ouverts 24 d'un segment 19 peut être un nombre impair supérieur ou égal à trois.

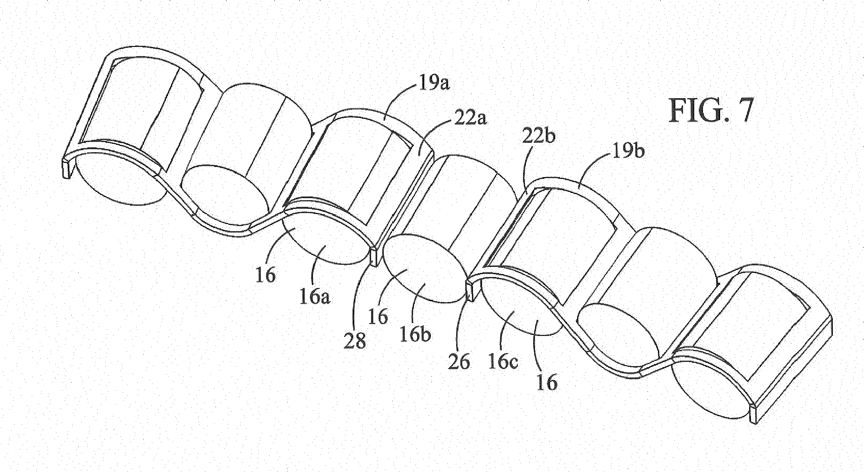

La figure 7 illustre une portion de cage segmentée 18 lorsque celle-ci est disposée dans une unité de roulement 10, les bagues intérieures 12 et extérieure 14 étant masquées pour plus de clarté. Les segments 19 de la cage segmentée 18 sont disposés entre les bagues intérieure 12 et extérieure 14 en une succession circonférentielle. Les corps roulants 16 sont positionnés dans les logements 24 des segments 19 de cage segmentée.

Dans le mode de réalisation de la figure 7, deux segments 19a, 19b circonférentiellement successifs sont séparés par un corps roulant 16b. Ce corps roulant 16b, séparant les segments successifs 19a, 19b, n'est pas accueilli dans un logement 24 mais est maintenu à équidistance des corps roulants 16a, 16c respectivement le précédant et le suivant par des ponts de liaisons 22a, 22b. Les ponts de liaisons 22a, 22b sont situés respectivement au niveau des seconde et première extrémités circonférentielles 26, 28 des segments successifs 19a, 19b.

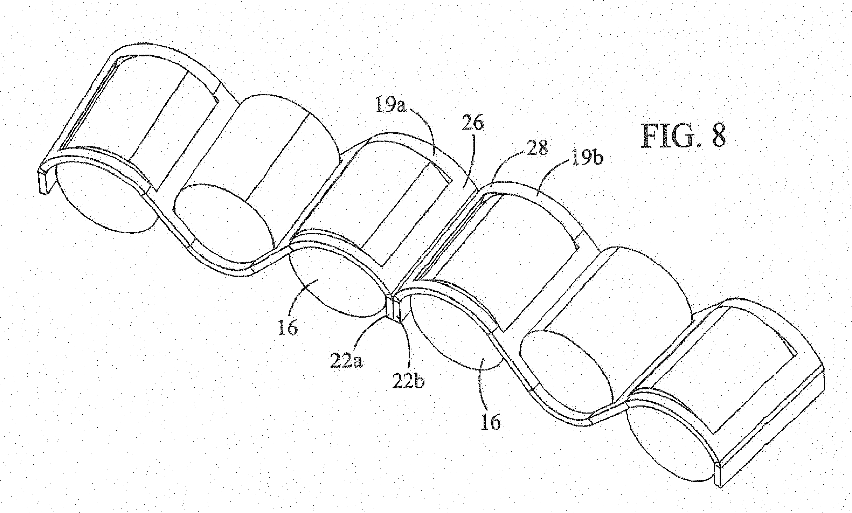

La figure 8 illustre un autre mode de réalisation dans lequel deux segments 19a, 19b circonférentiellement successifs sont en contact et ne sont donc séparés par aucun corps roulant 16.

Les deux segments 19a, 19b circonférentiellement successifs sont en contact à l'endroit de ponts de liaisons 22a, 22b situés respectivement au niveau des seconde et première extrémités circonférentielles 26, 28 des segments successifs 19a, 19b.

Un procédé de fabrication d'un segment 19 de cage segmentée tel que décrit ci avant comporte par exemple une étape au cours de laquelle on fournit une plaque de tôle suivie d'une étape au cours de laquelle on met en forme cette plaque de tôle pour définir un segment de cage segmentée 19, le segment de cage segmentée ayant une rigidité suffisante pour permettre aux segments d'une cage segmentée composée de tels segments de se mouvoir indépendamment les uns des autres lorsqu'ils sont en position entre les bagues extérieure et intérieure de l'unité de roulement.

## Revendications

1. Segment de cage segmentée pour une unité de roulement, destiné à être positionné entre une bague extérieure (14) et une bague intérieure (12), comprenant :
deux bras latéraux (20) se faisant face dans la direction générale d'un axe géométrique axial (AA) de l'unité de roulement lorsque le segment est en position entre les bagues extérieure (14) et intérieure (12) de l'unité de roulement, les bras latéraux (20) s'étendant chacun entre une première et une seconde extrémités circonférentielles (26, 28) ;
un premier et un second ponts de liaison (22) reliant structurellement les deux bras latéraux (20) pour les rendre solidaires l'un de l'autre, le premier et le second ponts de liaison (22) définissant avec les deux bras latéraux (20) un logement (24) ouvert destiné à accueillir un corps roulant ;
le segment (19) de cage segmentée étant **caractérisé en ce qu'**il est constitué d'un seul tenant par mise en forme d'une plaque de tôle et **en ce qu'**il comporte une conformation en volume par rapport à une courbe circonférentielle moyenne (S) entre une bague intérieure (12) et une bague extérieure (14) d'une unité de roulement lorsque le segment (19) est en position entre les bagues extérieure (14) et intérieure (12) de l'unité de roulement,
le segment (19) de cage segmentée ayant une rigidité suffisante pour permettre aux segments (19) d'une cage segmentée composée de tels segments (19) de se mouvoir indépendamment les uns des autres lorsqu'ils sont en position entre les bagues extérieure (14) et intérieure (12) de l'unité de roulement.

2. Segment de cage segmentée selon la revendication 1 présentant au moins une zone de débord radial interne (30) et au moins une zone de débord radial externe (32) par rapport à une courbe circonférentielle moyenne (S) entre une bague intérieure (12) et une bague extérieure (14) d'une unité de roulement lorsque le segment (19) est en position entre les bagues extérieure (14) et intérieure (12) de l'unité de roulement, dans lequel les zones de débord radial interne (30) et les zones de débord radial externe (32) sont circonférentiellement alternées, au moins une zone de débord radial interne (30) étant entourée par deux zones de débord radial externe (32) ou au moins une zone de débord radial externe (32) étant entourée par deux zones de débord radial interne (30).

3. Segment de cage segmentée selon la revendication 2 dans lequel l'un au moins des bras latéraux (20) présente une forme circonférentielle sensiblement ondulée autour de la courbe circonférentielle moyenne (S) lorsque le segment (19) est positionné entre la bague extérieure (14) et la bague intérieure (12) de l'unité de roulement, une ondulation dudit bras latéral (20) comprenant une zone de débord radial interne (30) et/ou une zone de débord radial externe (32) du segment (19).

4. Segment de cage segmentée selon la revendication 3 dans lequel l'un au moins des bras latéraux (20) présente une succession de parties arquées (38) séparées par des parties rectilignes (40), au moins une partie arquée (38) dudit bras latéral (20) comprenant une zone de débord radial interne (30) ou une zone de débord radial externe (32), au moins un pont de liaison (22) du segment (19) de cage étant relié audit bras latéral (20) à l'endroit d'une partie rectiligne (40).

5. Segment de cage segmentée selon l'une quelconque des revendications 2 à 4 dans lequel l'un au moins des ponts de liaison (22) comporte une partie en débord radial (44) s'étendant radialement par rapport à la courbe circonférentielle moyenne (S) lorsque le segment (19) est positionné entre la bague extérieure (14) et la bague intérieure (12) de l'unité de roulement, la partie en débord radial (44) du pont de liaison (22) comprenant une zone de débord radial interne (30) et/ou externe (32) du segment (19).

6. Segment de cage segmentée selon l'une quelconque des revendications 2 à 5, dans lequel une distance radiale entre une zone de débord radial externe (32) et une zone de débord radial interne (30) du segment est inférieure à une distance radiale entre la bague intérieure (12) et la bague extérieure (14) de l'unité de roulement de façon à fournir un jeu radial entre le segment (19) de cage segmentée et l'une au moins des bagues intérieure (12) et extérieure (14) de l'unité de roulement lorsque le segment (19) est positionné entre la bague extérieure (14) et la bague intérieure (12) de l'unité de roulement.

7. Segment de cage segmentée selon l'une quelconque des revendications 1 à 6, dans lequel une dimension, selon la direction circonférentielle, d'un logement (24) ouvert est inférieure à un diamètre d'un corps roulant (16) destiné à être accueilli dans ledit logement (24), de façon à ce que ledit corps roulant (16) ne puisse pas traverser ledit logement (24) de part en part lorsqu'il est accueilli dans ledit logement (24).

8. Segment de cage segmentée selon l'une quelconque des revendications 1 à 7, dans lequel les logements (24) ouverts destinés à accueillir les corps roulants sont situés à l'endroit des zones de débord radial interne (30) et des zones de débord radial externe (32).

9. Segment de cage segmentée selon l'une quelconque des revendications 1 à 8, comportant un nombre pair de ponts de liaison (22) reliant structurellement les deux bras latéraux (20) façon à définir avec les deux bras latéraux (20) un nombre impair de logements (24) ouverts destinés chacun à accueillir un corps roulant (16), le nombre de logements (24) ouverts étant en outre supérieur ou égal à trois logements.

10. Segment de cage segmentée selon l'une quelconque des revendications 1 à 9, le segment (19) étant réalisé en acier doux.

11. Cage segmentée comportant un ensemble de segments (19) de cage segmentée selon l'une quelconque des revendications 1 à 10, les segments (19) de cage segmentée étant aptes à se mouvoir indépendamment les uns des autres.

12. Unité de roulement, comprenant une bague intérieure (12), une bague extérieure (14) ainsi que des segments (19) de cage segmentée selon l'une quelconque des revendications 1 à 11 et des corps roulants (16) positionnés entre les bagues intérieure (12) et extérieure (14).

13. Unité de roulement selon la revendication 12 dans laquelle les segments (19) de cage segmentée sont positionnés circonférentiellement entre les bagues intérieure (12) et extérieure (14), des corps roulants (16) sont positionnés dans les logements (24) des segments (19) de cage segmentée et au moins deux segments (19) circonférentiellement successifs sont séparés par un corps roulant (16) ou au moins deux segments (19) circonférentiellement successifs sont en contact.

14. Unité de roulement selon l'une quelconque des revendications 12 et 13, dans laquelle, pour chaque segment (19) de cage segmentée, les corps roulants (16) sont successivement alternativement placés du côté radial interne et du côté radial externe du segment.

15. Procédé de fabrication d'un segment de cage segmentée pour une unité de roulement, destiné à être positionné entre une bague extérieure et une bague intérieure, dans lequel
- on fournit une plaque de tôle ; et
- on met en forme ladite plaque de tôle pour définir
deux bras latéraux (20) se faisant face dans la direction générale d'un axe géométrique axial (AA) et s'étendant chacun entre une première et une seconde extrémités circonférentielles (26, 28), et
un premier et un second ponts de liaison (22) reliant structurellement les deux bras latéraux (20) pour les rendre solidaires l'un de l'autre, le premier et le second ponts de liaison (22) définissant avec les deux bras latéraux (20) un logement (24) ouvert destiné à accueillir un corps roulant (16),
une conformation en volume par rapport à une courbe circonférentielle moyenne entre une bague intérieure (12) et une bague extérieure (14) d'une unité de roulement lorsque le segment (19) est en position entre les bagues extérieure (14) et intérieure (12) de l'unité de roulement,
le segment (19) de cage segmentée ayant une rigidité suffisante pour permettre aux segments (19) d'une cage segmentée composée de tels segments (19) de se mouvoir indépendamment les uns des autres lorsqu'ils sont en position entre les bagues extérieure (14) et intérieure (12) de l'unité de roulement.
